# EUROPEAN PATENT SPECIFICATION

(11) **EP 0 870 940 B1**
(45) Date of publication and mention of the grant of the patent: **17.10.2001**
(21) Application number: 98106616.0
(22) Date of filing: 09.04.1998
(51) Int. Cl.: F16C 33/72, G01P 3/44

(54) **Sealing assembly for two connected relatively rotating members, in particular the two rings of a rolling bearing**
Dichtungsanordnung für zwei miteinander verbundene, relativ drehende Teile, insbesondere die zwei Ringe eines Rollenlagers
Assemblage d'étanchéité pour deux membres connectés en rotation relative, particulièrement pour palier à roulement

(30) Priority: 11.04.1997 IT TO970307
(43) Date of publication of application: 14.10.1998
(73) Proprietor: SKF INDUSTRIE S.p.A., 10121 Torino (IT)
(72) Inventor: Vignotto, Angelo, 10100 Torino (IT); Peretti, Pietro Antonio, 10060 Piscina (IT); Forestiero, Daniele, 10060 Airasca (IT)
(74) Representative: Jorio, Paolo

(56) References cited:
- EP-A- 0 371 836
- EP-A- 0 378 939
- EP-A- 0 495 323
- EP-A- 0 681 185
- US-A- 5 575 568

## Description

The present invention relates to a sealing assembly for two connected relatively rotating members, in particular the two rings of a rolling bearing, and which, in addition to sealing, also comprises an integrated magnetic indicating ring, which cooperates with a detecting device outside the assembly to determine the rotation speed of one of the members with respect to the other.

Sealing assemblies of the above type are known which are inserted between the inner and outer rings of a rolling bearing, and wherein the magnetic ring, for example, is integral with the rotary ring and faces a fixed sensor connected to the stationary ring of the bearing.

Known assemblies, however, have several drawbacks. In particular, the magnetic ring is fitted, with a small amount of interference, directly to the rotary ring of bearing. Besides being difficult to assemble, direct fitment of the magnetic ring to the obviously rigid material of the bearing induces inservice vibration which may impair operation of the detecting device; and the magnetic ring, which is necessarily of limited thickness on account of the small amount of space available, is fragile and subject to breakage during assembly or operation.

Moreover, once assembled, the magnetic ring is held in place solely by the small amount of interference with the bearing ring, and may therefore rotate (thus resulting in detection errors) or even work loose during operation.

Finally, assemblies of the type described are incapable of withstanding more than a very limited amount of thermal expansion (due to the different thermal expansion coefficients of the magnet and bearing materials) or mechanical stress (impact). These drawbacks are not completely overcome by assemblies of the type disclosed in EP-A-0681185, in which the magnetic ring is not directly fitted to the bearing ring but it is housed with radial interference and axially snap-locked in an annular seat formed in an elastomeric element: the magnetic ring is still subjected to risk of damages both during the insertion into the seat (the magnetic ring being forced in the seat) and in use (since the magnetic ring projects axially from the seat and it is not protected by the elastomeric material).

It is an object of the present invention to provide a sealing assembly comprising an integrated magnetic ring, designed to overcome the aforementioned drawbacks. In particular, it is an object of the invention to provide an efficient sealing assembly which is easy to produce, and which ensures maximum long-term efficiency of the indicating element.

According to the present invention, there is provided a sealing assembly for two connected relatively rotating mechanical members, in particular the two rings of a rolling bearing, as claimed in claim 1.

As such, the magnetic indicating ring is not connected directly to the bearing material and is unaffected by vibration or stress, which are damped by the elastomeric covering; and the magnetic ring is held in the correct operating position under all conditions, by the elastomeric cover layer preventing any axial displacement or rotation of the magnetic ring with respect to the seat.

A non-limiting embodiment of the present invention will be described by way of example with reference to the accompanying drawings, in which:
Figure 1 shows a radial section of a sealing assembly in accordance with the present invention;
Figure 2 shows a larger-scale detail of the Figure 1 sealing assembly.

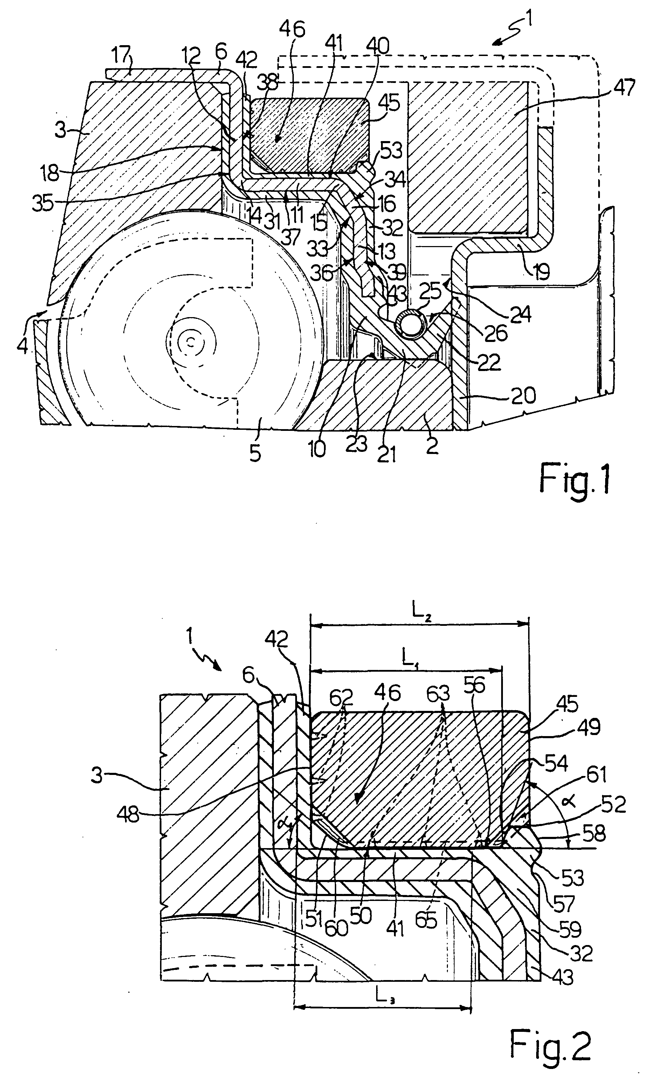

Number 1 in Figures 1 and 2 indicates a sealing assembly for two connected relatively rotating members : in the example shown, the inner ring 2 and outer ring 3 of a rolling bearing 4, in particular a ball bearing comprising balls 5.

In the following description, purely by way of a non-limiting example, inner ring 2 is assumed fixed, and outer ring 3 to rotate.

Sealing assembly 1 is carried integrally by rotary outer ring 3, and cooperates in sliding manner with fixed inner ring 2 to seal in fluidtight manner the gap between the two relatively rotating members.

Assembly 1 comprises a substantially rigid shield 6 defined, for example, by a metal supporting structure, and which carries an annular sealing element 10 made of elastomeric material.

Shield 6 in turn comprises a first sleeve-shaped portion 11; and two radial flanges 12, 13 extending in opposite radial directions from respective axial ends 14, 15 of sleeve-shaped portion 11. More specifically, flange 12 is radially outwards and flange 13 radially inwards with respect to sleeve-shaped portion 11.

Flange 13 is connected to end 15 of sleeve-shaped portion 11 by an intermediate annular portion 16 sloping at a predetermined angle with respect to sleeve-shaped portion 11.

Shield 6 also comprises a second sleeve-shaped portion 17 extending axially from a radially outer edge of flange 12 and on the opposite side to first sleeve-shaped portion 11. When assembly 1 is assembled, sleeve-shaped portion 17 is fitted integrally and directly to a radially outer lateral surface of rotary ring 3, while flange 12 rests axially against an annular end edge 18 of ring 3.

The radially inner flange 13 of shield 6 supports annular sealing element 10, which is made of elastomeric material, is co-molded and bonded during curing, and cooperates, in use, with inner ring 2 of bearing 4.

In a preferred embodiment, inner ring 2 is fitted integrally with a second rigid shield 19 (shown only partly) comprising a radial flange portion 20 substantially facing flange 13 of shield 6.

Sealing element 10 is shaped to comprise a first annular axial sealing lip 21 and a second annular radial sealing lip 22, which, in use, cooperate respectively in sliding manner with a radially outer lateral surface 23 of inner ring 2, and with a face 24 of flange portion 20 facing shield 6. Sliding contact between sealing lips 21, 22 and respective surfaces 23, 24 is guaranteed by a predetermined amount of interference at assembly, and by a known spring 25 housed in an annular seat 26 formed in a radially outer surface of sealing element 10.

Sealing element 10 extends to form two cover layers 31, 32 of elastomeric material on respective faces 33, 34 of shield 6. More specifically, layer 31 covers faces 35, 36 of flanges 12 and 13 facing balls 5 of bearing 4, and a radially inner lateral surface 37 of sleeve-shaped portion 11; while layer 32 covers faces 38, 39 of flanges 12 and 13 on the opposite side to faces 35, 36, and a radially outer lateral surface 40 of sleeve-shaped portion 11.

Consequently, cover layer 32 also comprises a cylindrical portion 41 (covering surface 40 of the corresponding sleeve-shaped portion 11 of shield 6); a flange portion 42 (covering face 38 of flange 12); and an annular connecting portion 43 connecting cylindrical portion 41 and sealing element 10 (and covering face 39 of flange 13).

In a preferred embodiment, elastomeric covering 32 comprises a circumferential projection 53 projecting radially from the end of cylindrical portion 41 facing away from flange portion 42, i.e. at end 15 of sleeve-shaped portion 11 of shield 6.

On the side facing portion 42 of covering 32, circumferential projection 53 comprises an annular surface 54, which, when undeformed, is inclined at a predetermined angle α with respect to a radially outer lateral surface 56 of cylindrical portion 41; and, on the opposite side to annular surface 54, projection 53 comprises a beveled edge defining a lead-in portion 58.

On the opposite side to annular surface 54, projection 53 also comprises a circumferential groove 57 permitting elastic deformation of projection 53, and which is located radially inwards with respect to outer lateral surface 56 of cylindrical portion 41 and at inclined intermediate portion 16 of shield 6.

Cylindrical portion 41, flange portion 42, and circumferential projection 53 of cover layer 32 define an annular seat 46 for a magnetic indicating ring 45 integrated in sealing assembly 1. Seat 46 is located outwards of bearing 4, i.e. on the opposite side of shield 6 with respect to balls 5, with its concavity facing outwards of the bearing.

Ring 45 is made of known magnetic material, and cooperates, in use, with a known outer detecting device 47 (shown schematically) to determine the relative rotation speed of rings 2, 3 of bearing 4. In the example shown, detecting device 47 faces magnetic ring 45, and is carried integrally by the stationary ring 2 of bearing 4, e.g. housed inside a seat defined by a specially shaped portion of shield 19.

Magnetic ring 45 is defined axially by two flat parallel sides 48, 49, which, at a radially inner lateral surface 50 of ring 45, have respective symmetric bevels 51, 52 inclined at a predetermined angle α₁ (e.g. about 45°) with respect to lateral surface 50. As will be seen later on, bevels 51, 52 provide for simplifying insertion of ring 45 inside seat 46; and the presence of two symmetric bevels enables magnetic ring 45 to be assembled either way, thus simplifying assembly (especially if performed automatically). Bevels 51, 52 are preferably splined or knurled to define respective numbers of radial grooves 60, 61.

When assembly 1 is assembled, magnetic ring 45 is housed inside seat 46 : the inner lateral surface 50 of ring 45 mates, with a small amount of interference, with sleeve-shaped portion 11 of shield 6, via the interposition of the corresponding cylindrical portion 41 of elastomeric layer 32; side 48 of magnetic ring 45 rests against flange portion 42 of elastomeric covering 32 supported on flange 12 of shield 6; and bevel 52 of the opposite side 49 is engaged by circumferential projection 53.

To create a predetermined interference between seat 46 and magnetic ring 45 to ensure the axial stability of the magnetic ring, the width L₁ of seat 46, measured between portion 42 and projection 53 of elastomeric covering 32, is less than the width L₂ of magnetic ring 45, defined as the axial distance between parallel sides 48, 49 of the magnetic ring, i.e. L₁ < L₂.

Moreover, the axial dimension L₃ of sleeve-shaped portion 11 of shield 6 is less than width L₁ of seat 46 as defined above, i.e. L₃ < L₁, so that projection 53 is located over a deformable annular portion 59 of elastomeric material, as opposed to a rigid element such as a portion of shield 6.

Moreover, to ensure a predetermined interference between projection 53 and magnetic ring 45 to further ensure the axial stability of the magnetic ring, the inclination α₁ of bevels 51, 52 of magnetic ring 45 is less than the inclination α of annular surface 54 of the undeformed projection 53, i.e. α₁ < α.

Magnetic ring 45 is insertable inside seat 46 by circumferential groove 57 and the particular conformation of shield 6 enabling elastic deformation of projection 53. That is, during assembly, bevel 51 of magnetic ring 45 slides over lead-in portion 58 to deform projection 53 radially; which deformation is permitted, not only by the deformable material of elastomeric covering 32, but above all by the presence of circumferential groove 57, and by the conformation of shield 6, in particular inclined portion 16, eliminating any rigid elements immediately beneath deformable projection 53.

Insertion of magnetic ring 45 is assisted by bevels 51, 52 of ring 45 and by lead-in portion 58 defined by the beveled edge of projection 53. As stated, the symmetric arrangement of bevels 51, 52 enables magnetic ring 45 to be assembled indifferently either way.

Once ring 45 is inserted inside seat 46, projection 53 springs back to cooperate with side 49 and engage bevel 52 of magnetic ring 45, which is thus retained axially between flange 12 and projection 53.

As opposed to being fitted directly to a rigid element, such as shield 6, magnetic ring 45 is thus inserted inside a seat (46) made of flexible, relatively soft elastomeric material : this provides not only for simplifying assembly of sealing assembly 1, but also for preventing mechanical and thermal stress from being transmitted from bearing 4 to, and so impairing operation of, magnetic ring 45.

As stated, projection 53 also defines an axial stop for axially retaining magnetic ring 45.

The ridges on knurled bevels 51, 52 of magnetic ring 45 also prevent the ring from rotating with respect to seat 46, by the elastomeric material of projection 53 becoming upset, during assembly, into the radial grooves 60, 61 defining the ridges.

In one variation, shown by the dash lines, flange portion 42 of elastomeric covering 32 defining the axial supporting layer of magnetic ring 45 comprises a number of deformable circumferential projections 62 for further retaining magnetic ring 45 axially inside seat 46, and for eliminating any axial clearance between magnetic ring 45 and seat 46.

Similarly, cylindrical portion 41 of covering 32 may be provided with circumferential splines 63 for further improving the axial stability, and preventing rotation, of magnetic ring 45. Again for preventing rotation of magnetic ring 45, the inner surface 50 of the magnetic ring may also be provided with axial grooves 65 (shown by the dash lines) perpendicular to the circumferential splines 63 formed on cylindrical portion 41 of covering 32, and which are upset elastically by the elastomeric material of covering 32.

Clearly, changes may be made to the sealing assembly as described and illustrated herein without, however, departing from the scope of the accompanying Claims.

## Claims

1. A sealing assembly (1) for two connected relatively rotating mechanical members (2, 3), in particular the two rings of a rolling bearing, and comprising a substantially rigid shield (6) fitted integrally to a first (3) of said connected mechanical members; a sealing ring (10) carried by said shield (6) and cooperating in fluidtight manner with a second (2) of said connected mechanical members; and a magnetic ring (45) carried integrally by said shield (6); said shield (6) comprising a first sleeve-shaped portion (11) to which said magnetic ring (45) is fitted, and a radially outer flange (12) extending from an axial end (14) of said first sleeve-shaped portion (11); the assembly also comprising a cover layer (32) of elastomeric material extending at least partly on said first sleeve-shaped portion (11) of the shield (6) and defining thereon an annular seat (46) for the insertion of said magnetic ring (45), said cover layer (32) being so shaped as to comprise a flange portion (42) and deformable axial stop means (53) axially delimiting on opposite sides said annular seat (46); the assembly being **characterized in that** the axial dimension (L₃) of said first sleeve-shaped portion (11) of the shield (6) is less than the width (L₁), measured between said flange portion (42) and said axial stop means (53) of the elastomeric cover layer (32), of said annular seat (46) for the insertion of said magnetic ring (45), so as to define a deformable annular portion (59) of elastomeric material beneath said axial stop means (53).

2. A sealing assembly as claimed in Claim 1, **characterized in that** said magnetic ring (45) is defined axially by two flat parallel sides (48, 49) comprising, at a radially inner lateral surface (50) of said magnetic ring (45), respective symmetric bevels (51, 52) splined or knurled internally to define respective numbers of radial grooves (60, 61).

3. A sealing assembly as claimed in Claim 2, **characterized in that** said radially inner lateral surface (50) of said magnetic ring (45) comprises a number of axial grooves (65).

4. A sealing assembly as claimed in Claim 3, **characterized in that** said cover layer (32) of elastomeric material is formed in one piece with said sealing ring (10); said sealing ring (10) projecting from a radially inner flange (13) of said shield (6).

5. A sealing assembly as claimed in Claim 4, **characterized in that** said flange portion (42) of said cover layer (32) extends at least partly on a first face (38) of said radially outer flange (12) of the shield (6) facing said first sleeve-shaped portion (11); said cover layer (32) of elastomeric material also comprising a cylindrical portion (41) extending on a radially outer lateral surface (40) of said first sleeve-shaped portion (11) of the shield (6) and cooperating with said radially inner lateral surface (50) of said magnetic ring (45), and an annular connecting portion (43) between said cylindrical portion (41) and said sealing ring (10).

6. A sealing assembly as claimed in Claim 5, **characterized in that** said axial stop means comprise at least a circumferential projection (53) projecting radially from the end of said cylindrical portion (41) of the cover layer (32) facing away from said flange portion (42) of the cover layer and cooperating with one (49) of said sides of said magnetic ring (45).

7. A sealing assembly as claimed in Claim 6, **characterized in that** said circumferential projection (53) comprises, on the side facing said flange portion (42) of the cover layer (32), an annular surface (54) having, when undeformed, a predetermined inclination (α) with respect to a radially outer lateral surface (56) of said cylindrical portion (41) of the cover layer (32); said circumferential projection (53) having a beveled edge on the opposite side to said annular surface (54).

8. A sealing assembly as claimed in Claim 7, **characterized in that** the inclination (α), when undeformed, of said annular surface (54) of said circumferential projection (53) with respect to said radially outer lateral surface (56) of said cylindrical portion (41) of the cover layer (32) is greater than the inclination (α₁) of said bevels (51, 52) of the magnetic ring (45) with respect to said radially inner lateral surface (50) of the magnetic ring (45).

9. A sealing assembly as claimed in Claim 7 or 8, **characterized in that** said circumferential projection (53) comprises a circumferential groove (57) on the opposite side to said annular surface (54); said circumferential groove (57) being located radially inwards with respect to said radially outer lateral surface (56) of said cylindrical portion (41) of the cover layer (32).

10. A sealing assembly as claimed in one of the foregoing Claims from 7 to 9, **characterized in that** said width (L₁) of the annular seat (46), measured between said flange portion (42) and said circumferential projection (53) of the elastomeric cover layer (32), is less than the width (L₂) of said magnetic ring (45), defined as the axial distance between said parallel sides (48, 49) of the magnetic ring.

11. A sealing assembly as claimed in one of the foregoing Claims from 7 to 10, **characterized in that** said radially inner flange (13) of the shield (6) is connected to said first sleeve-shaped portion (11) of the shield (6) by an intermediate annular portion (16) having a predetermined inclination with respect to said first sleeve-shaped portion (11).

12. A sealing assembly as claimed in one of the foregoing Claims from 7 to 11, **characterized in that** said flange portion (42) of the cover layer (32) has a number of elastically deformable circumferential projections (62).

13. A sealing assembly as claimed in one of the foregoing Claims from 7 to 12, **characterized in that** said cylindrical portion (41) of the cover layer (32) has a number of circumferential splines (63) perpendicular to said axial grooves (65) formed in said radially inner lateral surface (50) of said magnetic ring (45).

## Patentansprüche

1. Dichtvorrichtung (1) für zwei verbundene, relativ zueinander drehbare Bauelemente (2, 3), insbesondere die beiden Ringe eines Wälzlagers, die einen im wesentlichen steifen Schild (6), der integral an einem ersten (3) der verbundenen mechanischen Bauelemente angebracht ist, einen Dichtring (10), der von dem Schild (6) gehalten ist und mit dem zweiten (2) der verbundenen Bauelemente fluiddicht zusammenwirkt, und einen magnetischen Ring (45) aufweist, der fest von dem Schild (6) abgestützt ist, wobei der Schild (6) einen ersten hülsenförmigen Abschnitt (11), an welchem der magnetische Ring (45) angebracht ist, und einen radial äußeren Flansch (12) aufweist, der sich von einem axialen Ende (14) des ersten hülsenförmigen Abschnittes (11) aus erstreckt, und die Vorrichtung ferner eine Deckschicht (32) aus Elastomermaterial aufweist, die sich wenigstens teilweise auf dem ersten hülsenförmigen Abschnitt (11) des Schildes (6) erstreckt, auf diesem einen ringförmigen Sitz (46) für das Einfügen des magnetischen Ringes (45) bildet und derart geformt ist, daß sie einen Flanschbereich (42) und deformierbare axiale Haltemittel (53) aufweist, die den ringförmigen Sitz (46) jeweils auf entgegengesetzten Seiten begrenzen, **dadurch gekennzeichnet, daß** die axiale Erstreckung (L₃) des ersten hülsenförmigen Abschnittes (11) des Schildes (6) kleiner als die Breite (L₁) des ringförmigen Sitzes (46) zum Einfügen des magnetischen Ringes (45) - gemessen zwischen dem Flanschbereich (42) und den axialen Haltemitteln (53) der elastomeren Deckschicht (32) - ist, um einen deformierbaren ringförmigen Bereich (59) aus Elastomermaterial unterhalb der axialen Haltemittel (53) zu bilden.

2. Dichtvorrichtung nach Anspruch 1, **dadurch gekennzeichnet, daß** der magnetische Ring (45) axial durch zwei flache, parallele Seiten (48, 49) begrenzt ist, die an einer radial inneren Seitenfläche (50) des magnetischen Ringes (45) jeweils symmetrische Schrägen (51, 52) aufweisen, die innenseitig mit Nuten oder einer Rändelung versehen sind, um eine entsprechende Anzahl von Radialnuten (60, 61) zu bilden.

3. Dichtvorrichtung nach Anspruch 2, **dadurch gekennzeichnet, daß** die radial innere Seitenfläche (50) des magnetischen Ringes (45) eine Anzahl von Axialnuten (65) aufweist.

4. Dichtvorrichtung nach Anspruch 3, **dadurch gekennzeichnet, daß** die Deckschicht (32) aus Elastomermaterial einstückig mit dem Dichtring (10) ausgebildet ist, der von einem radial inneren Flansch (13) des Schildes (6) hervorsteht.

5. Dichtvorrichtung nach Anspruch 4, **dadurch gekennzeichnet, daß** sich der Flanschbereich (42) der Deckschicht (32) wenigstens teilweise auf einer ersten Fläche (38) des radial äußeren Flansches (12) des Schildes (6) erstreckt, der dem ersten hülsenförmigen Abschnitt (11) zugewandt ist, wobei die Deckschicht (32) aus Elastomermaterial ebenfalls einen zylindrischen Bereich (41), der sich auf einer radial äußeren Seitenfläche (40) des ersten hülsenförmigen Abschnittes (11) des Schildes (6) erstreckt und mit der radial inneren Seitenfläche (50) des magnetischen Ringes (45) zusammenwirkt, und einen ringförmigen Verbindungsbereich (43) zwischen dem zylindrischen Bereich und dem Dichtring (10) aufweist.

6. Dichtvorrichtung nach Anspruch 5, **dadurch gekennzeichnet, daß** die axialen Haltemittel wenigstens einen Umfangsvorsprung (53) aufweisen, der radial von dem Ende des zylindrischen Bereiches (41) der Deckschicht (32) hervorsteht, von dem Flanschbereich (42) der Deckschicht wegweist und mit einer (49) der Seiten des magnetischen Ringes (45) zusammenwirkt.

7. Dichtvorrichtung nach Anspruch 6, **dadurch gekennzeichnet, daß** der Umfangsvorsprung (53) auf der dem Flanschbereich (42) der Deckschicht (32) zugewandten Seite eine Ringfläche (54) aufweist, die, wenn sie unverformt ist, eine vorbestimmte Neigung (α) mit Bezug auf eine radial äußere Seitenfläche (56) des zylindrischen Bereichs (41) der Deckschicht (32) aufweist, wobei der Umfangsvorsprung (53) eine Schräge auf der der ringförmigen Fläche (54) gegenüberliegenden Seite aufweist.

8. Dichtvorrichtung nach Anspruch 7, **dadurch gekennzeichnet, daß** die Neigung (α) der ringförmigen Fläche (54) des Umfangsvorsprunges (53) im unverformten Zustand mit Bezug auf die radial äußere Seitenfläche (56) des zylindrischen Bereiches (41) der Deckschicht (32) größer als die Neigung (α₁) der Schrägen (51, 52) des magnetischen Ringes (45) mit Bezug auf die radial innere Seitenfläche (50) des magnetischen Ringes (45) ist.

9. Vorrichtung nach Anspruch 7 oder 8, **dadurch gekennzeichnet, daß** der Umfangsvorsprung (53) eine Umfangsnut (57) auf der der ringförmigen Fläche (54) gegenüberliegenden Seite aufweist, die mit Bezug auf die radial äußere Seitenfläche (56) des zylindrischen Bereiches (41) der Deckschicht (32) radial innenseitig angeordnet ist.

10. Dichtvorrichtung nach einem der Ansprüche 7 bis 9, **dadurch gekennzeichnet, daß** die Breite (L₁) des ringförmigen Sitzes (46), gemessen zwischen dem Flanschbereich (42) und dem Umfangsvorsprung (53) der elastomeren Deckschicht (32), kleiner als die Breite (L₂) des magnetischen Ringes (45) ist, die als axialer Abstand zwischen den parallelen Seiten (48, 49) des magnetischen Ringes definiert ist.

11. Dichtvorrichtung nach einem der Ansprüche 7 bis 10, **dadurch gekennzeichnet, daß** der radial innere Flansch (13) des Schildes (6) mit dem ersten hülsenförmigen Abschnitt (11) des Schildes (6) über einen zwischenliegenden ringförmigen Bereich (16) verbunden ist, der eine vorbestimmte Neigung mit Bezug auf den ersten hülsenförmigen Abschnitt (11) besitzt.

12. Dichtvorrichtung nach einem der Ansprüche 7 bis 11, **dadurch gekennzeichnet, daß** der Flanschbereich (42) der Deckschicht (32) eine Anzahl elastisch deformierbarer Umfangsvorsprünge (62) aufweist.

13. Dichtvorrichtung nach einem der Ansprüche 7 bis 12, **dadurch gekennzeichnet, daß** der zylindrische Bereich (41) der Deckschicht (32) eine Anzahl von Umfangsnuten (63) senkrecht zu den Axialnuten (65) aufweist, die auf der radial inneren Seitenfläche (50) des magnetischen Ringes (45) ausgebildet sind.

## Revendications

1. Assemblage d'étanchéité (1) pour deux éléments mécaniques connectés en rotation relative (2, 3), notamment les deux bagues d'un palier à roulement, et comprenant un élément de protection sensiblement rigide (6) adapté de façon solidaire à un premier (3) desdits éléments mécaniques connectés ; un anneau d'étanchéité (10) porté par ledit élément de protection (6) et coopérant d'une manière étanche au fluide avec un second (2) desdits éléments mécaniques connectés ; et un anneau magnétique (45) porté de façon solidaire par ledit élément de protection (6) ; ledit élément de protection (6) comprenant une première partie en forme de manchon (11) à laquelle est adapté ledit anneau magnétique (45), et une bride radialement externe (12) s'étendant depuis une extrémité axiale (14) de ladite première partie en forme de manchon (11) ; l'assemblage comprenant également une couche de recouvrement (32) en un matériau élastomère s'étendant au moins partiellement sur ladite première partie en forme de manchon (11) de l'élément de protection (6) et définissant sur sa surface un logement annulaire (46) pour l'insertion dudit anneau magnétique (45), ladite couche de recouvrement (32) étant formée de façon à comprendre une partie formant bride (42) et un moyen formant butée axiale déformable (53) délimitant axialement ledit logement annulaire (46) sur des côtés opposés ; l'assemblage étant **caractérisé en ce que** la dimension axiale (L₃) de ladite première partie en forme de manchon (11) de l'élément de protection (6) est inférieure à la largeur (L₁), mesurée entre ladite partie formant bride (42) et ledit moyen formant butée axiale (53) de la couche de recouvrement élastomère (32), dudit logement annulaire (46) pour l'insertion dudit anneau magnétique (45), de façon à définir une partie annulaire déformable (59) de matériau élastomère sous ledit moyen formant butée axiale (53).

2. Assemblage d'étanchéité selon la revendication 1, **caractérisé en ce que** ledit anneau magnétique (45) est défini axialement par deux faces plates parallèles (48, 49) comprenant, au niveau d'une surface latérale radialement interne (50) dudit anneau magnétique (45), des biseaux symétriques respectifs (51, 52) cannelés ou moletés intérieurement de façon à définir un certain nombre respectif de gorges radiales (60, 61).

3. Assemblage d'étanchéité selon la revendication 2, **caractérisé en ce que** ladite surface latérale radialement interne (50) dudit anneau magnétique (45) comprend un certain nombre de gorges axiales (65).

4. Assemblage d'étanchéité selon la revendication 3, **caractérisé en ce que** ladite couche de recouvrement (32) en matériau élastomère est formée d'une seule pièce avec ledit anneau d'étanchéité (10) ; ledit anneau d'étanchéité (10) faisant saillie à partir d'une bride radialement interne (13) dudit élément de protection (6).

5. Assemblage d'étanchéité selon la revendication 4, **caractérisé en ce que** ladite partie formant bride (42) de ladite couche de recouvrement (32) s'étend au moins partiellement sur une première face (38) de ladite bride radialement externe (12) de l'élément de protection (6) faisant face à ladite première partie en forme de manchon (11); ladite couche de recouvrement (32) en matériau élastomère comprenant également une partie cylindrique (41) s'étendant sur une surface latérale radialement externe (40) de ladite première partie en forme de manchon (11) de l'élément de protection (6) et coopérant avec ladite surface latérale radialement interne (50) dudit anneau magnétique (45), et une partie de connexion annulaire (43) entre ladite partie cylindrique (41) et ledit anneau d'étanchéité (10).

6. Assemblage d'étanchéité selon la revendication 5, **caractérisé en ce que** ledit moyen formant butée axiale comprend au moins une saillie circonférentielle (53) s'étendant radialement à partir de l'extrémité de ladite partie cylindrique (41) de la couche de recouvrement (32) faisant face d'un côté situé à l'opposé de ladite partie formant bride (42) de la couche de recouvrement et coopérant avec l'une (49) desdites faces dudit anneau magnétique (45).

7. Assemblage d'étanchéité selon la revendication 6, **caractérisé en ce que** ladite saillie circonférentielle (53) comprend, du côté en regard de ladite partie formant bride (42) de la couche de recouvrement (32), une surface annulaire (54) présentant, en condition non déformée, une inclinaison prédéterminée (α) par rapport à une surface latérale radialement externe (56) de ladite partie cylindrique (41) de la couche de recouvrement (32) ; ladite saillie circonférentielle (53) comportant un bord biseauté du côté situé à l'opposé de ladite surface annulaire (54).

8. Assemblage d'étanchéité selon la revendication 7, **caractérisé en ce que**, en condition non déformée, l'inclinaison (α) de ladite surface annulaire (54) de ladite saillie circonférentielle (53) par rapport à ladite surface latérale radialement externe (56) de ladite partie cylindrique (41) de la couche de recouvrement (32) est plus importante que l'inclinaison (α₁) desdits biseaux (51, 52) de l'anneau magnétique (45) par rapport à ladite surface latérale radialement interne (50) de l'anneau magnétique (45).

9. Assemblage d'étanchéité selon la revendication 7 ou la revendication 8, **caractérisé en ce que** ladite saillie circonférentielle (53) comprend une gorge circonférentielle (57) du côté situé à l'opposé de ladite surface annulaire (54) ; ladite gorge circonférentielle (57) étant située radialement vers l'intérieur par rapport à ladite surface latérale radialement externe (56) de ladite partie cylindrique (41) de la couche de recouvrement (32).

10. Assemblage d'étanchéité selon l'une quelconque des revendications précédentes 7 à 9, **caractérisé en ce que** ladite largeur (L₁) du logement annulaire (46), telle que mesurée entre ladite partie formant bride (42) et ladite saillie circonférentielle (53) de la couche de recouvrement élastomère (32), est inférieure à la largeur (L₂) dudit anneau magnétique (45), définie comme étant la distance axiale entre lesdites faces parallèles (48, 49) de l'anneau magnétique.

11. Assemblage d'étanchéité selon l'une quelconque des revendications précédentes 7 à 10, **caractérisé en ce que** ladite bride radialement interne (13) de l'élément de protection (6) est reliée à ladite première partie en forme de manchon (11) de l'élément de protection (6) par une partie annulaire intermédiaire (16) présentant une inclinaison prédéterminée par rapport à ladite première partie en forme de manchon (11).

12. Assemblage d'étanchéité selon l'une quelconque des revendications précédentes 7 à 11, **caractérisé en ce que** ladite partie formant bride (42) de la couche de recouvrement (32) présente un certain nombre de saillies circonférentielles élastiquement déformables (62).

13. Assemblage d'étanchéité selon l'une quelconque des revendications précédentes 7 à 12, **caractérisé en ce que** ladite partie cylindrique (41) de la couche de recouvrement (32) comporte un certain nombre de cannelures circonférentielles (63) perpendiculaires auxdites gorges axiales (65) formées dans ladite surface latérale radialement interne (50) dudit anneau magnétique (45).
